# EUROPÄISCHE PATENTSCHRIFT

(11) **EP 3 347 586 B1**
(45) Veröffentlichungstag und Bekanntmachung des Hinweises auf die Patenterteilung: **01.01.2025**
(21) Anmeldenummer: 16763241.3
(22) Anmeldetag: 06.09.2016
(51) Int. Cl.: F02F 7/00, F01M 13/04, F01M 13/02

(54) **ZYLINDERKOPFHAUBE UND VERFAHREN ZUM HERSTELLEN EINER ZYLINDERKOPFHAUBE**
CYLINDER HEAD COVER AND METHOD FOR PRODUCTION OF A CYLINDER HEAD COVER
COUVERCLE DE CULASSE ET PROCÉDÉ DE FABRICATION D'UN COUVERCLE DE CLUASSE

(30) Priorität: 08.09.2015 DE 102015217153
(43) Veröffentlichungstag der Anmeldung: 18.07.2018
(73) Patentinhaber: ElringKlinger AG, 72581 Dettingen (DE)
(72) Erfinder: COOLENS, Holger, 72070 Tübingen (DE); CZERMIN, Christian, 89312 Günzburg (DE)
(74) Vertreter: DTS Patent- und Rechtsanwälte PartmbB
(86) Internationale Anmeldenummer: PCT/EP2016/070994
(87) Internationale Veröffentlichungsnummer: WO 2017/042172

(56) Entgegenhaltungen:
- WO-A1-2016/135072
- US-A1- 2015 159 596
- US-A1- 2015 240 732
- US-A1- 2015 247 432
- US-B1- 8 152 884
- US-B2- 8 915 237

## Beschreibung

Die vorliegende Erfindung betrifft eine Zylinderkopfhaube für einen Verbrennungsmotor. Eine solche Zylinderkopfhaube umfasst vorzugsweise einen Haubenkörper, welcher im montierten Zustand der Zylinderkopfhaube an einem Motorblock des Verbrennungsmotors angeordnet ist und einen Zylinderkopf des Verbrennungsmotors abdeckt. Ferner umfasst eine solche Zylinderkopfhaube vorzugsweise eine Abscheidevorrichtung, durch welche ein Rohgasstrom zur Reinigung desselben hindurchführbar ist, wobei die Abscheidevorrichtung beispielsweise zumindest abschnittsweise durch den Haubenkörper gebildet und/oder begrenzt ist. Alternativ oder ergänzend zu einer solchen Abscheidevorrichtung kann eine Ventilvorrichtung vorgesehen sein, welche insbesondere zumindest abschnittsweise durch den Haubenkörper gebildet und/oder begrenzt ist. Abscheidevorrichtungen, insbesondere Ölabscheider für Verbrennungsmotoren, sind beispielsweise aus der WO 2015/018691 A1, der US 8,915,237 B2, der US 2015/240732 A1 oder der US 8,152,884 B1 bekannt.

US 8,915,237 B2 offenbart insbesondere eine Zylinderkopfhaube für einen Verbrennungsmotor gemäß dem Oberbegriff des Anspruchs 1.

Der vorliegenden Erfindung liegt die Aufgabe zugrunde, eine Zylinderkopfhaube für einen Verbrennungsmotor bereitzustellen, welche neben der reinen Abdeckfunktion weitere integrierte Funktionen aufweist.

Diese Aufgabe wird durch eine Zylinderkopfhaube für einen Verbrennungsmotor gemäß Anspruch 1 gelöst.

Dadurch, dass die Zylinderkopfhaube erfindungsgemäß eine Düsenvorrichtung umfasst, welche in die Abscheidevorrichtung und/oder in die Ventilvorrichtung integriert ist, weist die Zylinderkopfhaube neben der reinen Abdeckfunktion vorzugsweise mindestens eine weitere Funktion auf. Insbesondere kann hierdurch ein bauraumsparender und kostengünstiger Aufbau eines Verbrennungsmotors realisiert werden.

Erfindungsgemäß umfasst die Düsenvorrichtung eine Saugstrahldüse, mittels welcher ein Gasstrom ansaugbar und/oder abführbar ist.

Erfindungsgemäß ist zudem vorgesehen, dass die Saugstrahldüse einen Saugabschnitt umfasst, in welchen einerseits eine Treibdüse der Saugstrahldüse und andererseits eine Gasstromzuführung mündet, wobei der Saugabschnitt mindestens zweiteilig ausgebildet ist, wobei ein bezüglich einer radialen Richtung innerer Teil durch ein Einsatzelement gebildet ist, welches einen längs einer Strömungsrichtung im Wesentlichen konstanten Außenquerschnitt und/oder einen längs einer Strömungsrichtung variierenden Innenquerschnitt aufweist, wobei das Einsatzelement in einen bezüglich einer radialen Richtung äußeren Teil des Saugabschnitts einsetzbar ist, wobei das Einsatzelement entgegen der Strömungsrichtung in den äußeren Teil des Saugabschnitts einschiebbar ist.

Vorzugsweise umfasst die Saugstrahldüse eine Treibdüse, welcher zur Erzeugung einer Saugwirkung zum Ansaugen des Gasstroms ein Treibmedium, insbesondere Ladeluft, zuführbar ist.

Insbesondere kann vorgesehen sein, dass das Treibmedium, beispielsweise Ladeluft, durch die Treibdüse hindurchführbar ist, um eine Saugwirkung zum Ansaugen des Gasstroms zu erzeugen.

Das Treibmedium, insbesondere die Ladeluft, ist vorzugsweise dasjenige Medium, welches einem Brennraum des Verbrennungsmotors zuführbar ist, insbesondere nach Durchlaufen einer Kompressionsvorrichtung zur Druckerhöhung.

Vorteilhaft kann es sein, wenn der Gasstrom der durch die Abscheidevorrichtung hindurchgeführte Rohgasstrom ist.

Der Gasstrom ist vorzugsweise Kurbelgehäuseabgas, das heißt insbesondere verunreinigtes Gas aus einem Kurbelgehäuse des Verbrennungsmotors.

Durch Ansaugen des Gasstroms mittels der Düsenvorrichtung ist vorzugsweise eine Kurbelgehäuseentlüftung des Verbrennungsmotors realisierbar. Erfindungsgemäß ist ferner vorgesehen, dass die Saugstrahldüse einen Saugabschnitt umfasst, in welchen eine Treibdüse der Saugstrahldüse und eine Gasstromzuführung münden. Insbesondere sind die Treibdüse und die Gasstromzuführung auf einer gemeinsamen Eintrittsseite des Saugabschnitts angeordnet.

Mittels der Gasstromzuführung ist der mittels der Düsenvorrichtung anzusaugende und/oder abzuführende Gasstrom vorzugsweise zu dem Saugabschnitt zuführbar.

Es kann vorgesehen sein, dass der Saugabschnitt längs einer Strömungsrichtung gesehen einen sich verjüngenden Abschnitt, einen Zylinderabschnitt und/oder einen sich erweiternden Abschnitt umfasst.

Die Strömungsrichtung ist dabei insbesondere die Strömungsrichtung des durch die Treibdüse geführten und/oder aus der Treibdüse herausströmenden Treibmediums. Ferner ist die Strömungsrichtung vorzugsweise zugleich die Strömungsrichtung des Treibmediums und/oder des angesaugten Gasstroms in dem Saugabschnitt.

Der verjüngende Abschnitt des Saugabschnitts ist vorzugsweise ein auf die Gasstromzuführung und/oder die Treibdüse folgender Abschnitt des Saugabschnitts, insbesondere bezogen auf die Strömungsrichtung.

Insbesondere durch die Kombination der Treibdüse mit dem sich verjüngenden Abschnitt des Saugabschnitts ergibt sich vorzugsweise eine Sogwirkung in der Umgebung der Treibdüse, wenn Treibmedium aus der Treibdüse in den verjüngenden Abschnitt einströmt.

Die Treibdüse und der sich verjüngende Abschnitt, insbesondere der gesamte Saugabschnitt, sind vorzugsweise im Wesentlichen koaxial zueinander angeordnet.

Vorzugsweise sind die Treibdüse und der Saugabschnitt, insbesondere der sich verjüngende Abschnitt, der Zylinderabschnitt und/oder der sich erweiternde Abschnitt, im Wesentlichen rotationssymmetrisch ausgebildet.

Vorzugsweise ist insbesondere eine Innenkontur des Saugabschnitts im Wesentlichen rotationssymmetrisch ausgebildet.

Der Saugabschnitt und die Treibdüse sind vorzugsweise zumindest näherungsweise koaxial zueinander angeordnet, wobei eine gemeinsame Mittelachse vorzugsweise eine gemeinsame Rotationsachse ist.

Günstig kann es sein, wenn die Gasstromzuführung zumindest näherungsweise ringförmig in den Saugabschnitt mündet.

Die Gasstromzuführung umgibt vorzugsweise die Treibdüse im Wesentlichen ringförmig.

Mittels der Gasstromzuführung ist vorzugsweise die Treibdüse ringförmig mit anzusaugendem Gas umströmbar.

Vorteilhaft kann es sein, wenn der Saugabschnitt mindestens zweiteilig ausgebildet ist.

Ein bezüglich einer radialen Richtung äußerer Teil ist dabei vorzugsweise durch ein Gehäusebauteil der Abscheidevorrichtung und/oder durch ein Gehäusebauteil der Ventilvorrichtung und/oder durch den Haubenkörper gebildet.

Ein Gehäusebauteil ist beispielsweise ein Deckelelement.

Insbesondere kann vorgesehen sein, dass ein bezüglich einer radialen Richtung äußerer Teil des Saugabschnitts durch ein gemeinsames Gehäusebauteil sowohl der Abscheidevorrichtung als auch der Ventilvorrichtung gebildet ist.

Der bezüglich der radialen Richtung äußere Teil ist vorzugsweise ein im Wesentlichen zylinderförmiges Rohr, beispielsweise ein Anschlussstutzen, der Zylinderkopfhaube.

Erfindungsgemäß ist vorgesehen, dass der Saugabschnitt mindestens zweiteilig ausgebildet ist, wobei ein bezüglich einer radialen Richtung innerer Teil durch ein Einsatzelement gebildet ist, welches in einen bezüglich einer radialen Richtung äußeren Teil des Saugabschnitts einsetzbar ist.

Der innere Teil und der äußere Teil sind vorzugsweise mittels einer Rastverbindung und/oder einer Klipsverbindung miteinander verbindbar, insbesondere bezüglich einer Einsteckrichtung oder Einschubrichtung des Einsatzelements relativ zueinander festlegbar.

Das Einsatzelement weist erfindungsgemäß einen längs einer Strömungsrichtung im Wesentlichen konstanten Außenquerschnitt und/oder einen längs einer Strömungsrichtung variierenden Innenquerschnitt auf.

Das Einsatzelement ist vorzugsweise stabil und zuverlässig in einem im Wesentlichen zylindrischen Element aufnehmbar und/oder festlegbar. Zugleich ist mittels des Einsatzelements vorzugsweise ein Strömungsvariationsbereich geschaffen.

Vorzugsweise bildet das Einsatzelement eine Strömungsengstelle zur Erzeugung und/oder Optimierung einer Saugwirkung der Saugstrahldüse der Düsenvorrichtung.

Vorzugsweise sind ein sich verjüngender Abschnitt, ein Zylinderabschnitt und/oder ein sich erweiternder Abschnitt des Saugabschnitts durch das Einsatzelement gebildet.

Das Einsatzelement ist vorzugsweise einstückig ausgebildet.

Insbesondere kann vorgesehen sein, dass das Einsatzelement als ein Kunststoffbauteil, insbesondere als ein Spritzguss-Kunststoffbauteil, ausgebildet ist.

Vorteilhaft kann es sein, wenn das Einsatzelement eine Rastvorrichtung, insbesondere ein oder mehrere Rastelemente, zur Festlegung des Einsatzelements an einem äußeren Teil des mindestens zweiteiligen Saugabschnitts umfasst.

Das Einsatzelement ist vorzugsweise einstückig ausgebildet und umfasst vorzugsweise neben dem sich verjüngenden Abschnitt, dem Zylinderabschnitt und/oder dem sich erweiternden Abschnitt das eine oder die mehreren Rastelemente.

Bei einer Ausgestaltung der Erfindung kann vorgesehen sein, dass der Haubenkörper, ein Deckelelement der Abscheidevorrichtung, ein Deckelelement der Ventilvorrichtung, ein Saugabschnitt der Düsenvorrichtung und/oder eine Treibdüse der Düsenvorrichtung durch ein oder mehrere Kunststoffbauteile, insbesondere Spritzguss-Kunststoffbauteile, gebildet sind. Insbesondere kann vorgesehen sein, dass ein äußerer Teil des Saugabschnitts einstückig mit dem Haubenkörper oder einem Deckelelement als ein Spritzguss-Kunststoffbauteil ausgebildet ist.

Die Ventilvorrichtung umfasst vorzugsweise ein Druckregelventil.

Mittels des Druckregelventils ist vorzugsweise ein über die Düsenvorrichtung abzuführender Volumenstrom des Gasstroms regelbar, insbesondere abhängig von einer Druckdifferenz zwischen dem Druck in einem den abzusaugenden Gasstrom enthaltenden Innenraum des Verbrennungsmotors einerseits und dem Umgebungsdruck des Verbrennungsmotors andererseits.

Bei einer Ausgestaltung der Erfindung kann vorgesehen sein, dass die Abscheidevorrichtung eine oder mehrere Abscheidekammern umfasst, welche von dem Haubenkörper und einem Deckelelement der Abscheidevorrichtung begrenzt sind, wobei der Haubenkörper und/oder das Deckelelement vorzugsweise jeweils einstückig ausgebildet sind und zusätzlich zu der einen oder den mehreren Abscheidekammern vorzugsweise Folgendes bilden und/oder begrenzen:
mindestens eine Ventilkammer zur Aufnahme eines Ventilelements der Ventilvorrichtung; und/oder
eine Gasstromzuführung der Düsenvorrichtung; und/oder eine Treibdüse der Düsenvorrichtung; und/oder
einen Treibmediumanschluss der Düsenvorrichtung; und/oder
ein Abgangstutzen zur Abführung des Treibmediums und/oder des Gasstroms.

Mittels der Düsenvorrichtung ist vorzugsweise ein Ejektor für eine effiziente Kurbelgehäuseabgasabführung gebildet.

Die Abscheidevorrichtung ist vorzugsweise ein Ölabscheider, insbesondere ein Feinabscheider.

Die vorliegende Offenbarung betrifft ferner ein Verfahren zum Herstellen einer Zylinderkopfhaube.

Der Offenbarung liegt diesbezüglich die Aufgabe zugrunde, ein Verfahren bereitzustellen, mittels welchem eine Zylinderkopfhaube einfach herstellbar ist, welche neben einer reinen Abdeckfunktion weitere Funktionen aufweist.

Diese Aufgabe wird durch ein Verfahren zum Herstellen einer Zylinderkopfhaube gelöst, wobei das Verfahren Folgendes umfasst: Bereitstellen eines Haubenkörpers, welcher im montierten Zustand der Zylinderkopfhaube an einem Motorblock des Verbrennungsmotors angeordnet ist und einen Zylinderkopf des Verbrennungsmotors abdeckt;
Bereitstellen und Anordnen eines Deckelelements an dem Haubenkörper zur Ausbildung mindestens einer Abscheidekammer einer Abscheidevorrichtung und/oder mindestens einer Ventilkammer einer Ventilvorrichtung,
wobei der Haubenkörper und/oder das Deckelelement zumindest einen Abschnitt einer Düsenvorrichtung umfassen oder bilden.

Das Verfahren weist vorzugsweise einzelne oder mehrere der im Zusammenhang mit der erfindungsgemäßen Zylinderkopfhaube beschriebenen Merkmale und/oder Vorteile auf.

Vorzugsweise ist die erfindungsgemäße Zylinderkopfhaube durch Durchführung des Verfahrens herstellbar.

Ferner können die erfindungsgemäße Zylinderkopfhaube und/oder das Verfahren einzelne oder mehrere der nachfolgend beschriebenen Merkmale und/oder Vorteile aufweisen:
Die Düsenvorrichtung dient vorzugsweise zur vakuumunterstützten Kurbelgehäuseentlüftung und/oder zur effizienten Ölabscheidung.

Die Düsenvorrichtung kann vorzugsweise alternativ oder ergänzend zu einer externen Pumpe oder einem externen Ejektor vorgesehen sein.

Vorzugsweise weist die Düsenvorrichtung der erfindungsgemäßen Zylinderkopfhaube keine im Betrieb beweglichen Teile und/oder keine Elektronickomponenten und/oder keine Steuerung auf.

Durch die Integration der Düsenvorrichtung in die Zylinderkopfhaube ist vorzugsweise eine besonders kompakte Bauform der gesamten Kurbelgehäuseentlüftung realisierbar.

Die Düsenvorrichtung ist vorzugsweise in die Ventilvorrichtung integriert.

Insbesondere kann vorgesehen sein, dass ein Saugabschnitt der Düsenvorrichtung in einem Abgangstutzen des Druckregelventils angeordnet und/oder ausgebildet ist.

Der Saugabschnitt ist oder umfasst vorzugsweise ein Mischrohr, in welchem der anzusaugende und/oder abzuführende Gasstrom mit dem Treibmedium vermischt wird.

Das Mischrohr kann beispielsweise ein Einsatzelement (Einschubteil) zum Einsetzen in den Abgangstutzen des Druckregelventils sein.

Ferner kann das Mischrohr durch geeignete Formgebung des Abgangstutzens gebildet sein.

Die Treibdüse ist vorzugsweise durch geeignete Formgebung des Druckregelventils und/oder eines Deckelelements gebildet.

Günstig kann es sein, wenn ein Deckelelement der Abscheidevorrichtung sowohl einen Abschnitt der Abscheidevorrichtung als auch der Ventilvorrichtung und/oder der Düsenvorrichtung bildet.

Vorzugsweise sind ein Treibmediumanschluss, ein Abgangstutzen und ein Deckelelement, welches eine oder mehrere Abscheidekammern und/oder eine oder mehrere Ventilkammern begrenzt, einstückig miteinander ausgebildet, beispielsweise als ein Spritzguss-Kunststoffbauteil.

Die Düsenvorrichtung ist vorzugsweise zumindest abschnittsweise zwischen der Abscheidevorrichtung und der Ventilvorrichtung angeordnet.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Zylinderkopfhaube;
- Fig. 2: einen schematischen perspektivischen Schnitt durch einen Saugabschnitt und eine Treibdüse einer Düsenvorrichtung der Zylinderkopfhaube aus Fig. 1;
- Fig. 3: einen weiteren schematischen perspektivischen Schnitt durch die Düsenvorrichtung der Zylinderkopfhaube aus Fig. 1;
- Fig. 4: eine schematische Draufsicht auf eine Oberseite der Zylinderkopfhaube aus Fig. 1;
- Fig. 5: einen schematischen Schnitt längs der Linie 5-5 in Fig. 4;
- Fig. 6: eine vergrößerte Darstellung des Bereichs VI in Fig. 5;
- Fig. 7: einen schematischen Schnitt längs der Linie 7-7 in Fig. 4;
- Fig. 8: einen schematischen Schnitt längs der Linie 8-8 in Fig. 4;
- Fig. 9: einen schematischen Schnitt längs der Linie 9-9 in Fig. 4;
- Fig. 10: einen schematischen Schnitt längs der Linie 10-10 in Fig. 4; und
- Fig. 11: einen schematischen Schnitt längs der Linie 11-11 in Fig. 4.

Gleiche oder funktional äquivalente Elemente sind in sämtlichen Figuren mit denselben Bezugszeichen versehen.

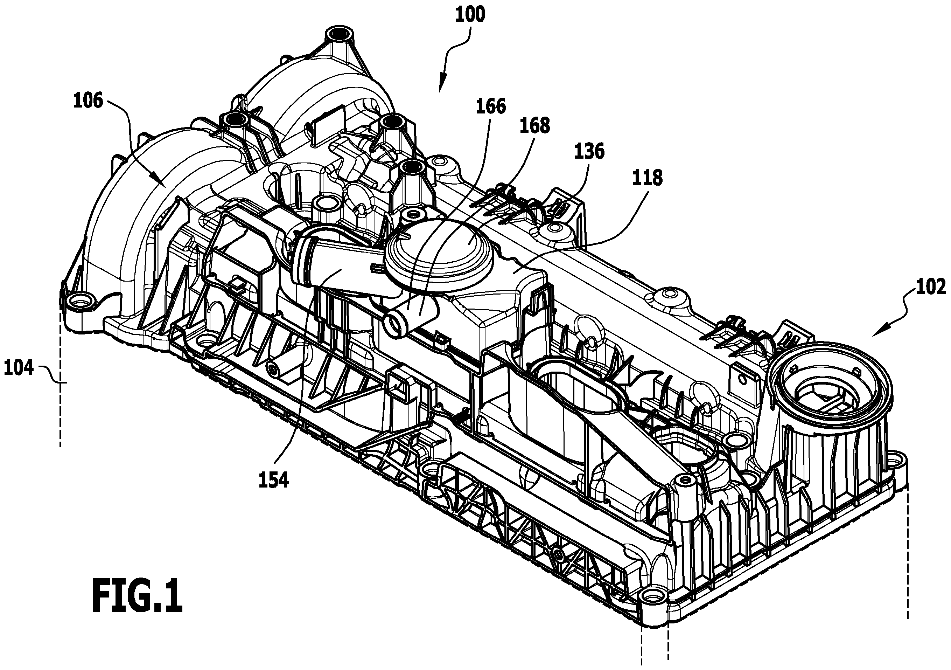

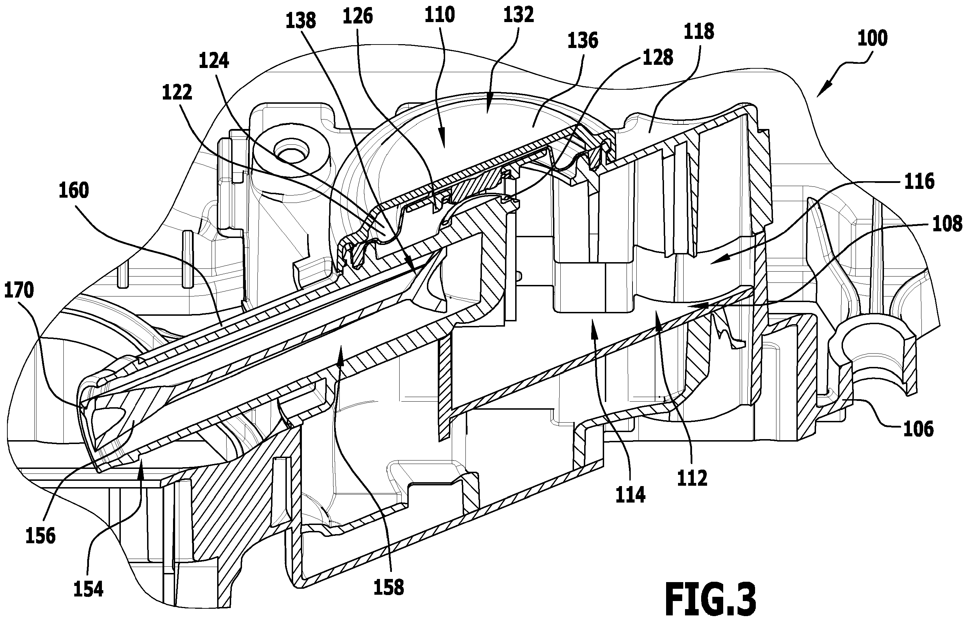

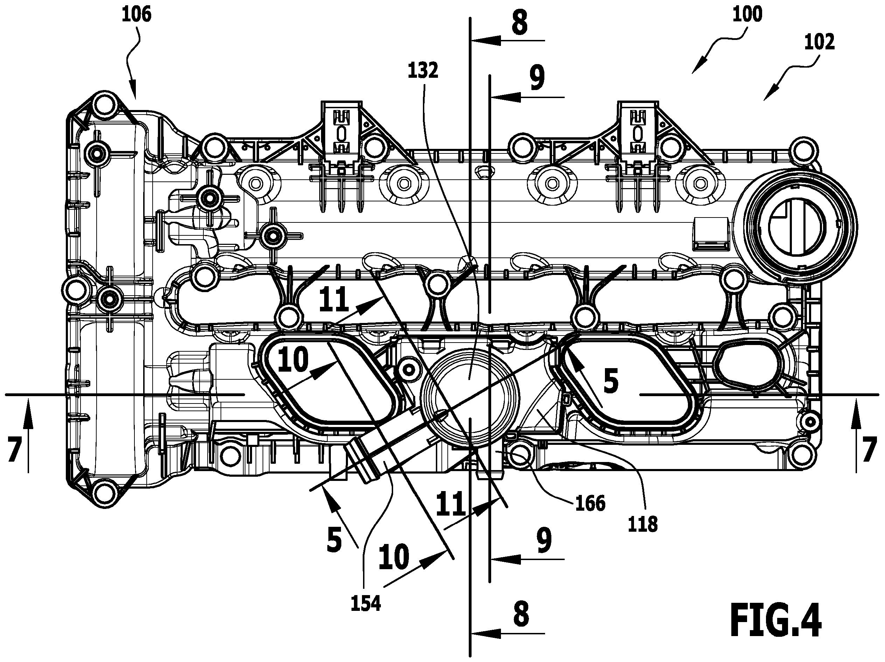

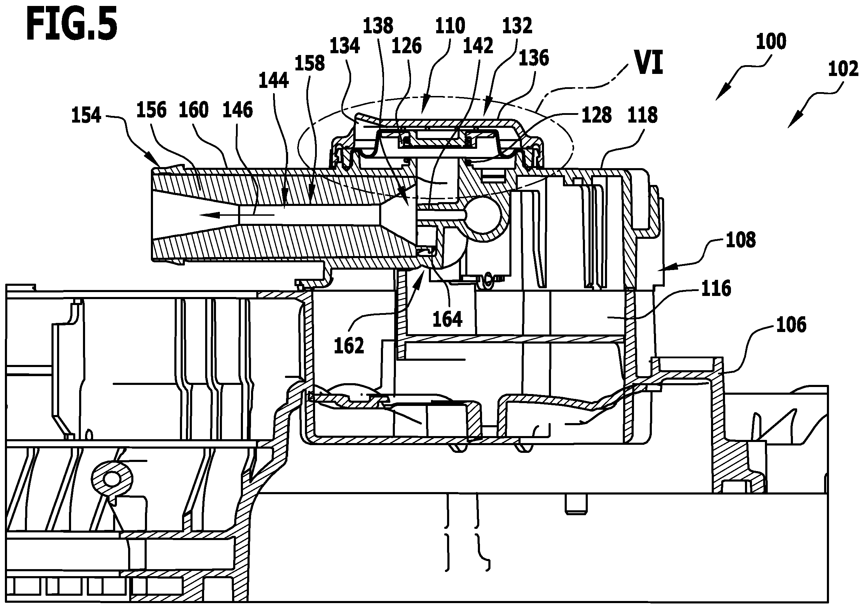

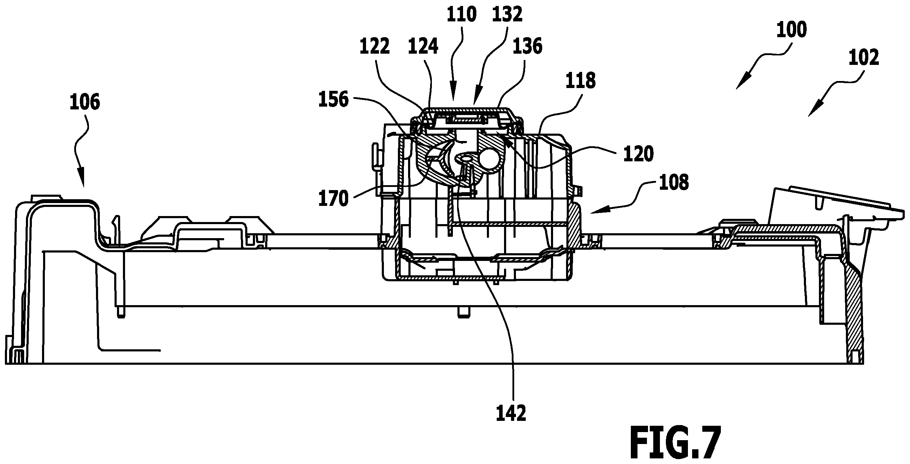

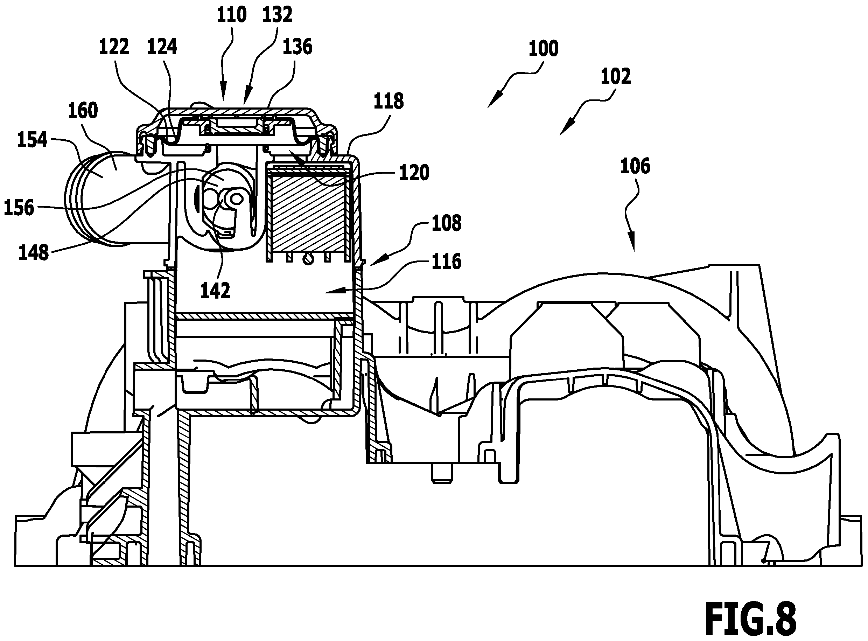

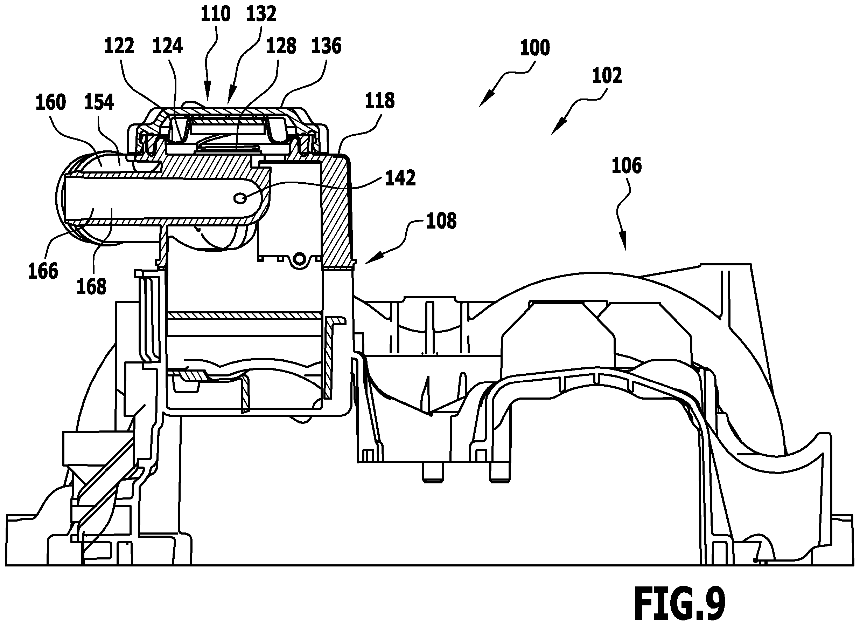

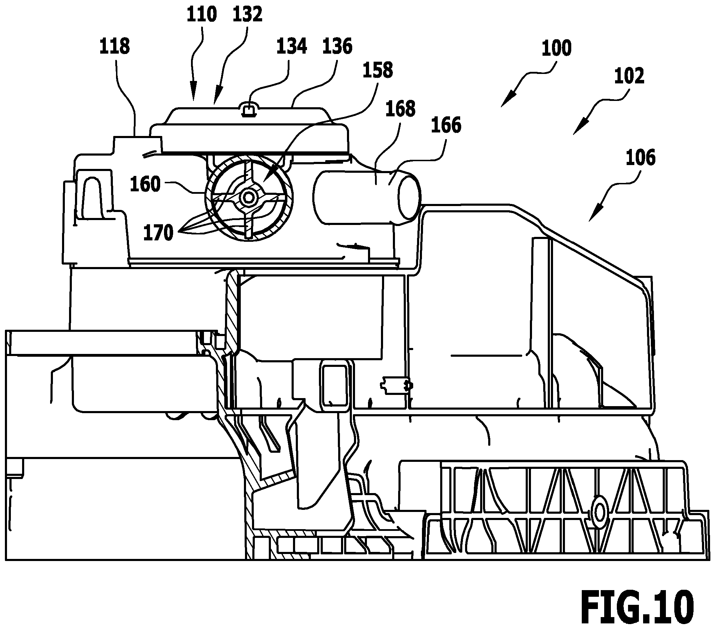

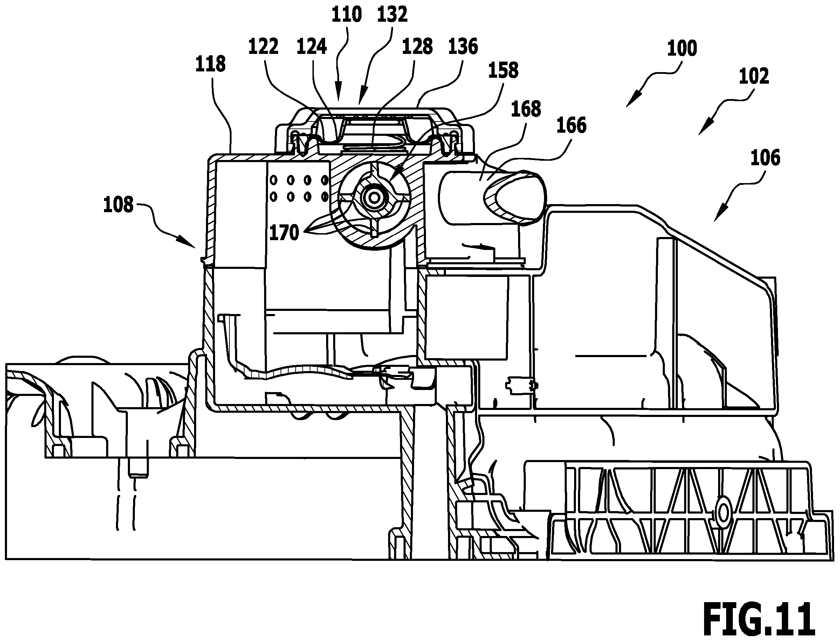

Eine in den Fig. 1 bis 11 dargestellte Ausführungsform einer als Ganzes mit 100 bezeichneten Zylinderkopfhaube findet insbesondere an einem Verbrennungsmotor 102, beispielsweise einem Fahrzeugmotor, Verwendung.

Die Zylinderkopfhaube 100 ist dabei insbesondere an einem Zylinderkopf 104 des Verbrennungsmotors 102 angeordnet, um den Zylinderkopf 104 abzudecken.

Die Zylinderkopfhaube 100 kann bei herkömmlichen bekannten Ausführungsformen insbesondere ausschließlich der Abdeckung des Zylinderkopfs 104 dienen.

Vorzugsweise weist die Zylinderkopfhaube 100 jedoch weitere Funktionen auf, um insbesondere einen besonders kompakten Verbrennungsmotor 102 bereitstellen zu können.

Die Zylinderkopfhaube 100 gemäß der in den Fig. 1 bis 11 dargestellten Ausführungsform umfasst insbesondere einen Haubenkörper 106, welcher die Funktion einer herkömmlichen Zylinderkopfhaube 100 erfüllt und den Zylinderkopf 104 abdeckt.

Der Haubenkörper 106 ist beispielsweise ein Kunststoffbauteil, beispielsweise ein Spritzguss-Kunststoffbauteil.

Zusätzlich umfasst die Zylinderkopfhaube 100 vorzugsweise eine Abscheidevorrichtung 108 und/oder eine Ventilvorrichtung 110.

Die Abscheidevorrichtung 108 ist insbesondere ein Ölabscheider 112, beispielsweise ein Feinabscheider 114, zum Abscheiden von Öl, insbesondere Öltröpfchen, aus einem Gasstrom.

Insbesondere dient die Abscheidevorrichtung 108 dem Abscheiden von Öl aus einem Rohgasstrom, welcher beispielsweise aus dem Zylinderkopf 104 und/oder einem Kurbelgehäuse des Verbrennungsmotors 102 stammt.

Die Abscheidevorrichtung 108 umfasst vorzugsweise eine oder mehrere Abscheidekammern 116, welche beispielsweise mit Abscheideelementen, insbesondere Prallabscheidern, Filterelementen, etc., versehen sind.

Die eine oder die mehreren Abscheidekammern 116 sind dabei insbesondere einerseits von dem Haubenkörper 106 begrenzt. Andererseits ist ein Deckelelement 118 vorgesehen, welches die eine oder die mehreren Abscheidekammern 116 begrenzt.

Vorzugsweise sind die eine oder die mehreren Abscheidekammern 116 vollständig mittels des Haubenkörpers 106 und des Deckelelements 118 gebildet.

Das Deckelelement 118 ist beispielsweise ein Kunststoffbauteil, insbesondere ein Spritzguss-Kunststoffbauteil.

Vorzugsweise ist das Deckelelement 118 an einer Innenseite oder Außenseite des Haubenkörpers 106 an dem Haubenkörper 106 angeordnet, beispielsweise festgeschweißt.

Bei der in den Fig. 1 bis 11 dargestellten Ausführungsform der Zylinderkopfhaube 100 ist das Deckelelement 118 an einer Außenseite des Haubenkörpers 106 angeordnet.

Die Abscheidevorrichtung 108 umfasst einen Einlassabschnitt, durch welchen zu reinigendes Rohgas in die Abscheidevorrichtung 108 einströmen kann, insbesondere angesaugt werden kann.

Ferner umfasst die Abscheidevorrichtung 108 einen Auslass, durch welchen gereinigtes Gas abgeführt werden kann.

Der Auslass der Abscheidevorrichtung 108 ist vorzugsweise durch die Ventilvorrichtung 110 gebildet.

Mittels der Ventilvorrichtung 110 kann somit bei der in den Fig. 1 bis 11 dargestellten Ausführungsform der Zylinderkopfhaube 100 ein durch die Abscheidevorrichtung 108 hindurchströmender Gasstrom geregelt werden.

Die Ventilvorrichtung 110 ist vorzugsweise abschnittsweise durch das Deckelelement 118 der Abscheidevorrichtung 108 gebildet.

Insbesondere ist eine Ventilkammer 120 der Ventilvorrichtung 110 durch das Deckelelement 118 begrenzt.

Die Ventilkammer 120 ist insbesondere ein Raum, in welchem ein Ventilelement 122, insbesondere eine Membran 124, der Ventilvorrichtung 110 aufgenommen oder aufnehmbar ist.

Die Ventilvorrichtung 110 umfasst vorzugsweise ferner einen Stützteller 126, an welchem ein Federelement 128 der Ventilvorrichtung 110 angreift.

Mittels des Federelements 128 ist dabei der Stützteller 126, welcher ferner mit der Membran 124 verbunden ist, bei vorgegebenen Druckverhältnissen in einer Offenstellung anordenbar.

In dieser Offenstellung kann insbesondere ein Gasstrom aus der Abscheidevorrichtung 108 herausströmen und einer Gasstromzuführung 130 zugeführt werden.

Die Ventilvorrichtung 110 ist dabei insbesondere als ein Druckregelventil 132 ausgebildet, bei welchem automatisch durch variierende Druckverhältnisse auf den beiden Seiten des Ventilelements 122 sich eine Öffnung oder ein Schließen der Ventilvorrichtung 110 ergibt.

Eine Seite des Ventilelements 122 steht dabei über ein Referenzdruckloch 134 in einem Druckregelventildeckel 136 der Ventilvorrichtung 110 mit einer Umgebung der Zylinderkopfhaube 100 in Verbindung, so dass auf dieser Seite des Ventilelements 122 stets der Umgebungsluftdruck anliegt.

Die weitere Seite des Ventilelements 122 steht zum einen mit der Abscheidevorrichtung 108 und zum anderen mit einer noch zu beschreibenden Düsenvorrichtung 138 fluidwirksam und/oder druckwirksam in Verbindung.

Das Ventilelement 122 ist dabei insbesondere derart bewegbar und in eine Offenstellung oder Schließstellung bringbar, dass eine Fluidverbindung zwischen der Abscheidevorrichtung 108 und der Düsenvorrichtung 138 herstellbar oder trennbar ist.

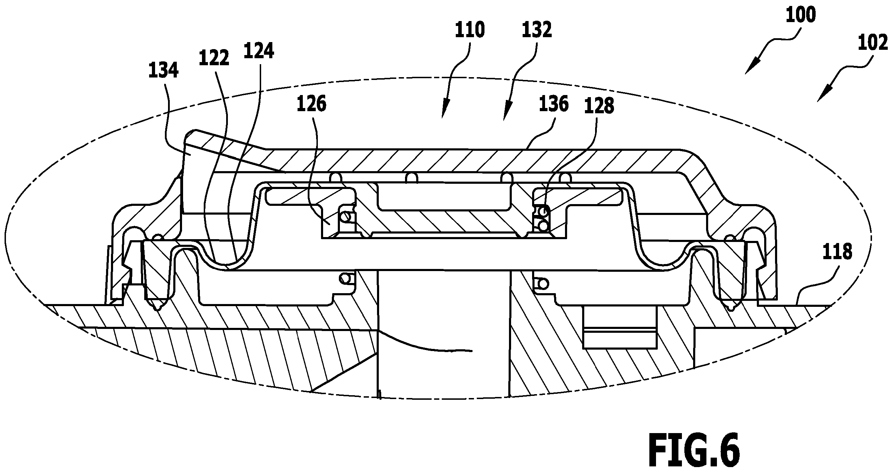

Wie insbesondere aus Fig. 6 hervorgeht, ist die Ventilvorrichtung 110 im Wesentlichen an einer dem Haubenkörper 106 abgewandten Außenseite des Deckelelements 118 angeordnet.

Der Druckregelventildeckel 136 ist dabei insbesondere mittels einer Klipsverbindung und/oder Rastverbindung und/oder Schweißverbindung an dem Deckelelement 118 festgelegt.

Die Düsenvorrichtung 138 umfasst insbesondere eine Saugstrahldüse 140.

Die Saugstrahldüse 140 umfasst insbesondere eine Treibdüse 142, durch welche ein Treibmedium, beispielsweise Ladeluft, hindurchführbar ist.

Mittels der Treibdüse 142 und des durch die Treibdüse 142 hindurchgeführten Treibmediums kann vorzugsweise in einem Saugabschnitt 144 der Saugstrahldüse 140 ein Saugeffekt erzeugt werden.

Mittels dieses Saugeffekts kann insbesondere Gas aus der Abscheidevorrichtung 108 angesaugt werden.

Die Gasstromzuführung 130 mündet vorzugsweise in den Saugabschnitt 144.

Die Gasstromzuführung 130 ist dabei vorzugsweise im Wesentlichen ringförmig ausgebildet und umgibt die Treibdüse 142.

Mittels der Gasstromzuführung 130 und der Treibdüse 142 kann somit einerseits Treibmedium und andererseits das aus der Abscheidevorrichtung 108 abgeführte Gas im Wesentlichen koaxial zu dem Saugabschnitt 144 zugeführt werden.

Der Saugabschnitt 144 ist im Wesentlichen rohrförmig ausgebildet.

Vorzugsweise umfasst der Saugabschnitt 144 einen sich längs einer Strömungsrichtung 146 verjüngenden Abschnitt 148, einen Zylinderabschnitt 150 und einen sich in der Strömungsrichtung 146 erweiternden Abschnitt 152.

Der sich verjüngende Abschnitt 148, der Zylinderabschnitt 150 und der sich erweiternde Abschnitt 152 sind dabei vorzugsweise in dieser Reihenfolge längs der Strömungsrichtung 146 aufeinanderfolgend angeordnet.

Die Strömungsrichtung 146 ist dabei insbesondere die Strömungsrichtung 146 des Treibmediums, welches durch die Treibdüse 142 zu dem Saugabschnitt 144 zugeführt wird, und/oder des Gases, welches über die Gasstromzuführung 130 in den Saugabschnitt 144 eingesaugt wird.

Der sich verjüngende Abschnitt 148 weist einen sich längs der Strömungsrichtung 146 verjüngenden Innenquerschnitt auf. Insbesondere umgibt der sich verjüngende Abschnitt 148 vorzugsweise einen kegelstumpfförmigen Hohlraum.

Der Zylinderabschnitt 150 weist vorzugsweise einen längs der Strömungsrichtung 146 im Wesentlichen konstanten, beispielsweise kreisförmigen, Innenquerschnitt auf. Insbesondere umgibt der Zylinderabschnitt 150 vorzugsweise einen zylinderförmigen, beispielsweise kreiszylinderförmigen, Hohlraum.

Der sich erweiternde Abschnitt 152 weist vorzugsweise einen in der Strömungsrichtung 146 sich erweiternden Innenquerschnitt auf. Vorzugsweise umgibt der sich erweiternde Abschnitt 152 einen kegelstumpfförmigen Hohlraum.

Mittels des sich verjüngenden Abschnitts 148, des Zylinderabschnitts 150 und des sich erweiternden Abschnitts 152 ist insbesondere eine Strömungsverjüngung im Saugabschnitt 144 gebildet, wodurch sich ein Saugeffekt der Saugstrahldüse 140 erzeugen und/oder optimieren lässt.

Der Saugabschnitt 144 ist vorzugsweise in einem Abgangstutzen 154 integriert.

Der Abgangstutzen 154 ist insbesondere ein Anschlussstutzen zum Anschluss eines gasführenden Schlauchs, um letztlich Ladeluft samt abgeführtem Gas aus dem Ölabscheider 112 zu den Brennkammern des Verbrennungsmotors 102 zuzuführen.

Der Saugabschnitt 144 ist erfindungsgemäß zweiteilig oder mehrteilig ausgebildet.

Beispielsweise kann vorgesehen sein, dass ein bezüglich der Strömungsrichtung 146 radial innenliegender Teil des Saugabschnitts 144, welcher nachfolgend als radial innerer Teil 156 bezeichnet wird, als ein Kunststoffbauteil, insbesondere ein Spritzguss-Kunststoffbauteil, ausgebildet ist.

Der radial innere Teil 156 ist beispielsweise ein Einsatzelement 158, welches insbesondere in einen im Wesentlichen hohlkreiszylindrischen radial äußeren Teil 160 des Saugabschnitts 144 einsetzbar, beispielsweise einschiebbar, ist. Der radial äußere Teil 160 des Saugabschnitts 144 ist vorzugsweise Bestandteil des Haubenkörpers 106 und/oder des Deckelelements 118.

Bei der in den Fig. 1 bis 11 dargestellten Ausführungsform der Zylinderkopfhaube 100 ist der radial äußere Teil 160 des Saugabschnitts 144 der Abgangstutzen 154, welcher Bestandteil des Deckelelements 118 ist.

Zur Verbindung des radial inneren Teils 156 und des radial äußeren Teils 160 ist vorzugsweise eine Rastvorrichtung 162 vorgesehen.

Die Rastvorrichtung 162 umfasst vorzugsweise ein oder mehrere Rastelemente 164, mittels welchen der radial innere Teil 156 und der radial äußere Teil 160 des Saugabschnitts 144 miteinander verrastbar sind.

Beispielsweise sind mehrere Rastelemente 164 an dem Einsatzelement 158 ausgebildet und mit dem radial äußeren Teil 160 verrastbar.

Das Einsatzelement 158 ist erfindungsgemäß entgegen der Strömungsrichtung 146 in den äußeren Teil 160 des Saugabschnitts 144 einschiebbar.

Wie beispielsweise aus Fig. 1 hervorgeht, sind die Treibdüse 142 und der Saugabschnitt 144 derart in die Abscheidevorrichtung 108 und in die Ventilvorrichtung 110 integriert, dass ein Treibmediumanschluss 166 ebenso wie der Abgangstutzen 154 unmittelbar an die Abscheidevorrichtung 108 und/oder die Ventilvorrichtung 110 angrenzen, beispielsweise zumindest abschnittsweise zwischen der Abscheidevorrichtung 108 einerseits und der Ventilvorrichtung 110 andererseits verlaufen und/oder angeordnet sind.

Der Treibmediumanschluss 166 ist dabei insbesondere ein Ladeluftzuführstutzen 168, welcher vorzugsweise ebenso wie der Abgangstutzen 154 einstückig mit dem Deckelelement 118 ausgebildet ist.

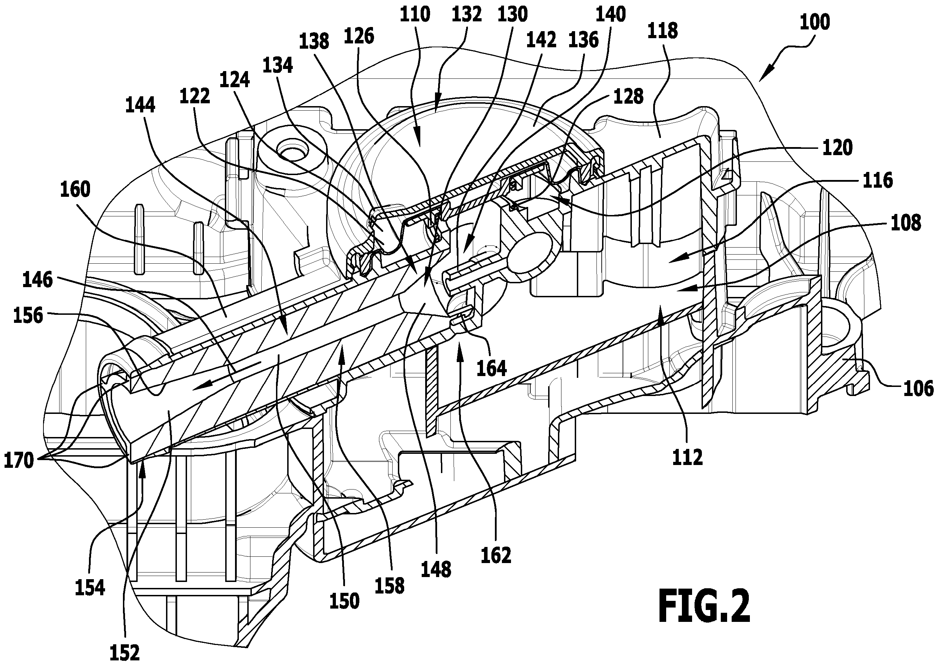

Wie beispielsweise den Fig. 2, 3, 10 und 11 zu entnehmen ist, erstreckt sich das Einsatzelement 158 nicht massiv bis nach außen zu dem radial äußeren Teil 160 des Saugabschnitts 144.

Vielmehr sind vorzugsweise mehrere Stege 170 zur Anlage des Einsatzelements 158 an dem radial äußeren Teil 160 des Saugabschnitts 144 vorgesehen.

Die Rastelemente 164 sind vorzugsweise Verlängerungen dieser Stege 170.

Die in den Fig. 1 bis 11 dargestellte Zylinderkopfhaube 100 ist vorzugsweise dadurch einfach herstellbar und ermöglicht vorzugsweise dadurch die Bereitstellung eines Verbrennungsmotors 102 mit geringen Außenmaßen, dass die Zylinderkopfhaube 100 zusätzlich zu dem Haubenkörper 106 mit herkömmlicherweise abdeckender Funktion weitere Bauteile mit Zusatzfunktionen umfasst. Insbesondere sind dies die Abscheidevorrichtung 108, die Ventilvorrichtung 110 und die Düsenvorrichtung 138.

Dadurch, dass beispielsweise das Deckelelement 118 Teile von sowohl der Abscheidevorrichtung 108 als auch der Ventilvorrichtung 110 und der Düsenvorrichtung 138 bildet, kann mit geringem Herstellungs- und Fertigungsaufwand eine Vielzahl von Funktionen bei der Zylinderkopfhaube 100 realisiert werden.

Dadurch, dass der Saugabschnitt 144 der Düsenvorrichtung 138 zweiteilig ausgebildet ist, kann der radial äußere Teil 160 als üblicher Abgangstutzen 154 ausgebildet werden, während mittels des Einsatzelements 158 die saugeffektoptimierende Strömungsengstelle geschaffen ist.

## Patentansprüche

1. Zylinderkopfhaube (100) für einen Verbrennungsmotor (102), umfassend:
- einen Haubenkörper (106), welcher im montierten Zustand der Zylinderkopfhaube (100) an einem Motorblock des Verbrennungsmotors (102) angeordnet ist und einen Zylinderkopf (104) des Verbrennungsmotors (102) abdeckt;
- eine Abscheidevorrichtung (108), durch welche ein Rohgasstrom zur Reinigung desselben hindurchführbar ist, wobei die Abscheidevorrichtung (108) zumindest abschnittsweise durch den Haubenkörper (106) gebildet und/oder begrenzt ist; und/oder
- eine Ventilvorrichtung (110), welche zumindest abschnittsweise durch den Haubenkörper (106) gebildet und/oder begrenzt ist,
wobei die Zylinderkopfhaube (100) eine Düsenvorrichtung (138) umfasst, welche in die Abscheidevorrichtung (108) und/oder in die Ventilvorrichtung (110) integriert ist, wobei die Düsenvorrichtung (138) eine Saugstrahldüse (140) umfasst, mittels welcher ein Gasstrom ansaugbar und/oder abführbar ist,
wobei die Saugstrahldüse (140) einen Saugabschnitt (144) umfasst, in welchen einerseits eine Treibdüse (142) der Saugstrahldüse (140) und andererseits eine Gasstromzuführung (130) mündet,
wobei der Saugabschnitt (144) mindestens zweiteilig ausgebildet ist, wobei ein bezüglich einer radialen Richtung innerer Teil (156) durch ein Einsatzelement (158) gebildet ist, welches einen längs einer Strömungsrichtung (146) im Wesentlichen konstanten Außenquerschnitt und/oder einen längs einer Strömungsrichtung (146) variierenden Innenquerschnitt aufweist, wobei das Einsatzelement (158) in einen bezüglich einer radialen Richtung äußeren Teil (160) des Saugabschnitts (144) einsetzbar ist,
**dadurch gekennzeichnet, dass**
das Einsatzelement (158) entgegen der Strömungsrichtung (146) in den äußeren Teil (160) des Saugabschnitts (144) einschiebbar ist.

2. Zylinderkopfhaube (100) nach Anspruch 1, **dadurch gekennzeichnet, dass** die Saugstrahldüse (140) eine Treibdüse (142) umfasst, welcher zur Erzeugung einer Saugwirkung zum Ansaugen des Gasstroms ein Treibmedium, insbesondere Ladeluft, zuführbar ist.

3. Zylinderkopfhaube (100) nach einem der Ansprüche 1 oder 2, **dadurch gekennzeichnet, dass** der Gasstrom der durch die Abscheidevorrichtung (108) hindurchgeführte Rohgasstrom ist.

4. Zylinderkopfhaube (100) nach einem der Ansprüche 1 bis 3, **dadurch gekennzeichnet, dass** der Saugabschnitt (144) längs einer Strömungsrichtung (146) gesehen einen sich verjüngenden Abschnitt (148), einen Zylinderabschnitt (150) und einen sich erweiternden Abschnitt (152) umfasst.

5. Zylinderkopfhaube (100) nach einem der Ansprüche 1 bis 4, **dadurch gekennzeichnet, dass** der Saugabschnitt (144) und die Treibdüse (142) zumindest näherungsweise koaxial zueinander angeordnet sind.

6. Zylinderkopfhaube (100) nach einem der Ansprüche 1 bis 5, **dadurch gekennzeichnet, dass** die Gasstromzuführung (130) zumindest näherungsweise ringförmig in den Saugabschnitt (144) mündet.

7. Zylinderkopfhaube (100) nach einem der Ansprüche 1 bis 6, **dadurch gekennzeichnet, dass** der bezüglich einer radialen Richtung äußere Teil (160) des Saugabschnitts (144) durch ein Gehäusebauteil (118) der Abscheidevorrichtung (108) und/oder durch ein Gehäusebauteil (118) der Ventilvorrichtung (110) und/oder durch den Haubenkörper (106) gebildet ist.

8. Zylinderkopfhaube (100) nach einem der Ansprüche 1 bis 7, **dadurch gekennzeichnet, dass** das Einsatzelement (158) eine Rastvorrichtung (162), insbesondere ein oder mehrere Rastelemente (164), zur Festlegung desselben an dem äußeren Teil (160) des mindestens zweiteiligen Saugabschnitts (144) umfasst.

9. Zylinderkopfhaube (100) nach einem der Ansprüche 1 bis 8, **dadurch gekennzeichnet, dass** der Haubenkörper (106), ein Deckelelement (118) der Abscheidevorrichtung (108), ein Deckelelement (118) der Ventilvorrichtung (110), der Saugabschnitt (144) der Düsenvorrichtung (138) und/oder eine Treibdüse (142) der Düsenvorrichtung (138) durch ein oder mehrere Kunststoffbauteile, insbesondere Spritzguss-Kunststoffbauteile, gebildet sind.

10. Zylinderkopfhaube (100) nach einem der Ansprüche 1 bis 9, **dadurch gekennzeichnet, dass** die Ventilvorrichtung (110) ein Druckregelventil (132) umfasst, mittels welchem ein über die Düsenvorrichtung (138) abzuführender Volumenstrom des Gasstroms regelbar ist.

11. Zylinderkopfhaube (100) nach einem der Ansprüche 1 bis 10, **dadurch gekennzeichnet, dass** die Abscheidevorrichtung (108) eine oder mehrere Abscheidekammern (116) umfasst, welche von dem Haubenkörper (106) und einem Deckelelement (118) der Abscheidevorrichtung (108) begrenzt sind, wobei der Haubenkörper (106) und/oder das Deckelement (118) jeweils einstückig ausgebildet sind und zusätzlich zu der einen oder den mehreren Abscheidekammern (116) Folgendes bilden und/oder begrenzen:
- mindestens eine Ventilkammer (120) zur Aufnahme eines Ventilelements (122) der Ventilvorrichtung (110); und/oder
- eine Gasstromzuführung (130) der Düsenvorrichtung (138); und/oder
- eine Treibdüse (142) der Düsenvorrichtung (138); und/oder
- einen Treibmediumanschluss (166) der Düsenvorrichtung (138); und/oder
- einen Abgangstutzen (154) zur Abführung des Treibmediums und/oder des Gasstroms.

## Claims

1. Cylinder head cover (100) for an internal combustion engine (102), comprising:
- a cover body (106) which, in the assembled state of the cylinder head cover (100), is arranged on an engine block of the internal combustion engine (102) and covers a cylinder head (104) of the internal combustion engine (102);
- a separation device (108) through which a crude gas stream can be fed for the purification thereof, wherein the separation device (108) is formed and/or bounded at least in sections by the cover body (106); and/or
- a valve device (110) which is formed and/or bounded at least in sections by the cover body (106),
wherein the cylinder head cover (100) comprises a nozzle device (138) which is integrated into the separation device (108) and/or into the valve device (110),
wherein the nozzle device (138) comprises a suction jet nozzle (140) by means of which a gas stream can be drawn in and/or removed,
wherein the suction jet nozzle (140) comprises a suction section (144) into which, on the one hand, a drive nozzle (142) of the suction jet nozzle (140) and, on the other hand, a gas stream supply (130) open,
wherein the suction section (144) has at least two parts, wherein an inner part (156) with respect to a radial direction is formed by an insertion element (158) which has a substantially constant outer cross-section along a flow direction (146) and/or a varying inner cross-section along a flow direction (146), wherein the insertion element (158) can be inserted into an outer part (160) of the suction section (144) with respect to a radial direction,
**characterized in that** the insertion element (158) can be introduced into the outer part (160) of the suction section (144) counter to the flow direction (146).

2. Cylinder head cover (100) in accordance with claim 1, **characterized in that** the suction jet nozzle (140) comprises a drive nozzle (142) to which a drive medium, in particular charge air, can be supplied in order to generate a suction effect for drawing up the gas stream.

3. Cylinder head cover (100) in accordance with any one of claims 1 or 2, **characterized in that** the gas stream is the crude gas stream fed through the separation device (108).

4. Cylinder head cover (100) in accordance with any one of claims 1 to 3, **characterized in that** the suction section (144), seen along a flow direction (146), comprises a tapering section (148), a cylinder section (150) and an enlarging section (152).

5. Cylinder head cover (100) in accordance with any one of claims 1 to 4, **characterized in that** the suction section (144) and the drive nozzle (142) are arranged at least approximately coaxially to each other.

6. Cylinder head cover (100) in accordance with any one of claims 1 to 5, **characterized in that** the gas stream supply (130) opens at least approximately annularly into the suction section (144).

7. Cylinder head cover (100) in accordance with any one of claims 1 to 6, **characterized in that** the outer part (160) of the suction section (144) with respect to a radial direction is formed by a housing component (118) of the separation device (108) and/or by a housing component (118) of the valve device (110) and/or by the cover body (106).

8. Cylinder head cover (100) in accordance with any one of claims 1 to 7, **characterized in that** the insertion element (158) comprises a detent device (162), in particular one or more detent elements (164), for fixing it on the outer part (160) of the at least two-part suction section (144).

9. Cylinder head cover (100) in accordance with any one of claims 1 to 8, **characterized in that** the cover body (106), a cover element (118) of the separation device (108), a cover element (118) of the valve device (110), the suction section (144) of the nozzle device (138) and/or a drive nozzle (142) of the nozzle device (138) are formed by one or more plastic components, in particular injection-molded plastic components.

10. Cylinder head cover (100) in accordance with any one of claims 1 to 9, **characterized in that** the valve device (110) comprises a pressure-regulating valve (132) by means of which a volumetric flow of the gas stream to be removed via the nozzle device (138) can be regulated.

11. Cylinder head cover (100) in accordance with any one of claims 1 to 10, **characterized in that** the separation device (108) comprises one or more separation chambers (116) which are bounded by the cover body (106) and a cover element (118) of the separation device (108), wherein the cover body (106) and/or the cover element (118) are each formed in one piece and form and/or bound the following in addition to the one or more separation chambers (116):
- at least one valve chamber (120) for receiving a valve element (122) of the valve device (110); and/or
- a gas stream supply (130) of the nozzle device (138); and/or
- a drive nozzle (142) of the nozzle device (138); and/or
- a drive medium connection (166) of the nozzle device (138); and/or
- an outlet connecting piece (154) for removing the drive medium and/or the gas stream.

## Revendications

1. Capot de culasse (100) pour un moteur à combustion interne (102), comprenant :
- un corps de capot (106) qui, à l'état monté du capot de culasse (100), est disposé sur un bloc moteur du moteur à combustion interne (102) et recouvre une culasse (104) du moteur à combustion interne (102) ;
- un dispositif de séparation (108), à travers lequel un flux de gaz brut peut être guidé pour le nettoyer, dans lequel le dispositif de séparation (108) est formé et/ou délimité au moins dans certaines zones par le corps de capot (106) ; et/ou
- un dispositif de soupape (110), qui est formé et/ou délimité au moins dans certaines zones par le corps de capot (106),
dans lequel le capot de culasse (100) comprend un dispositif à buse (138) qui est intégré dans le dispositif de séparation (108) et/ou dans le dispositif de soupape (110),
dans lequel le dispositif à buse (138) comprend une buse à jet d'aspiration (140) au moyen de laquelle un flux de gaz peut être aspiré et/ou évacué,
dans lequel la buse à jet d'aspiration (140) comprend une section d'aspiration (144) dans laquelle débouchent, d'une part, une buse de propulsion (142) de la buse à jet d'aspiration (140) et, d'autre part, une amenée de flux de gaz (130),
dans lequel la section d'aspiration (144) est réalisée au moins en deux parties, dans lequel une partie (156) intérieure par rapport à une direction radiale est formée par un élément d'insertion (158) qui présente une section transversale extérieure sensiblement constante le long d'une direction d'écoulement (146) et/ou une section transversale intérieure variant le long d'une direction d'écoulement (146), dans lequel l'élément d'insertion (158) peut être inséré dans une partie (160) de la section d'aspiration (144), laquelle partie est extérieure par rapport à une direction radiale,
**caractérisé en ce que** l'élément d'insertion (158) peut être inséré dans la partie (160) extérieure de la section d'aspiration (144) dans le sens opposé à la direction d'écoulement (146).

2. Capot de culasse (100) selon la revendication 1, **caractérisé en ce que** la buse à jet d'aspiration (140) comprend une buse de propulsion (142) à laquelle un agent propulseur, en particulier de l'air de suralimentation, peut être amené pour produire un effet d'aspiration pour l'aspiration du flux de gaz.

3. Capot de culasse (100) selon l'une des revendications 1 ou 2,
**caractérisé en ce que** le flux de gaz est le flux de gaz brut traversant le dispositif de séparation (108).

4. Capot de culasse (100) selon l'une des revendications 1 à 3,
**caractérisé en ce que** la section d'aspiration (144), vue le long d'une direction d'écoulement (146), comprend une section effilée (148), une section cylindrique (150) et une section évasée (152).

5. Capot de culasse (100) selon l'une des revendications 1 à 4,
**caractérisé en ce que** la section d'aspiration (144) et la buse de propulsion (142) sont au moins approximativement disposées de manière coaxiale l'une à l'autre.

6. Capot de culasse (100) selon l'une des revendications 1 à 5,
**caractérisé en ce que** l'amenée de flux de gaz (130) débouche au moins approximativement en forme d'anneau dans la section d'aspiration (144).

7. Capot de culasse (100) selon l'une des revendications 1 à 6,
**caractérisé en ce que** la partie (160) de la section d'aspiration (144), laquelle partie est extérieure par rapport à une direction radiale, est formée par un élément de boîtier (118) du dispositif de séparation (108) et/ou par un élément de boîtier (118) du dispositif de soupape (110) et/ou par le corps de capot (106).

8. Capot de culasse (100) selon l'une des revendications 1 à 7,
**caractérisé en ce que** l'élément d'insertion (158) comprend un dispositif
d'encliquetage (162), en particulier un ou plusieurs éléments d'encliquetage (164), pour la fixation de celui-ci sur la partie (160) extérieure de la section d'aspiration (144) au moins en deux parties.

9. Capot de culasse (100) selon l'une des revendications 1 à 8,
**caractérisé en ce que** le corps de capot (106), un élément formant couvercle (118) du dispositif de séparation (108), un élément formant couvercle (118) du dispositif de soupape (110), la section d'aspiration (144) du dispositif à buse (138) et/ou une buse de propulsion (142) du dispositif à buse (138) sont formés par un ou plusieurs composants en matière plastique, en particulier des composants en matière plastique moulés par injection.

10. Capot de culasse (100) selon l'une des revendications 1 à 9,
**caractérisé en ce que** le dispositif de soupape (110) comprend une soupape de régulation de pression (132) au moyen de laquelle un débit volumique du flux de gaz à évacuer par l'intermédiaire du dispositif à buse (138) peut être régulé.

11. Capot de culasse (100) selon l'une des revendications 1 à 10,
**caractérisé en ce que** le dispositif de séparation (108) comprend une ou plusieurs chambres de séparation (116) délimitées par le corps de capot (106) et un élément formant couvercle (118) du dispositif de séparation (108), dans lequel le corps de capot (106) et/ou l'élément formant couvercle (118) sont respectivement réalisés d'une seule pièce et forment et/ou délimitent, outre la ou les chambres de séparation (116), ce qui suit :
- au moins une chambre de soupape (120) destinée à recevoir un élément de soupape (122) du dispositif de soupape (110) ; et/ou
- une amenée de flux de gaz (130) du dispositif à buse (138) ; et/ou
- une buse de propulsion (142) du dispositif à buse (138) ; et/ou
- un raccord d'agent propulseur (166) du dispositif à buse (138) ; et/ou
- une tubulure de sortie (154) pour l'évacuation de l'agent propulseur et/ou du flux de gaz.
